# EUROPEAN PATENT APPLICATION

(11) **EP 2 615 857 A1**
(43) Date of publication of application: **17.07.2013**
(21) Application number: 12290011.1
(22) Date of filing: 10.01.2012
(51) Int. Cl.: H04W 4/02

(54) **Method for determining a future location of a mobile electronic device**

(71) Applicant: Alcatel Lucent, 75007 Paris (FR)
(72) Inventor: Fonseca dos Santos, André, 70197 Stuttgart (DE); Aziz, Danish, 70435 Stuttgart (DE)
(74) Representative: MERH-IP Matias Erny Reichl Hoffmann

(57) **Abstract**

A method for determining a future location of a mobile electronic device (200) comprises:
- receiving route information at a communication network (100), wherein the route information includes destination information;
- associating the route information with the mobile electronic device (200);
- determining a future location of the mobile electronic device (200) from the route information associated with the mobile electronic device (200); and
- providing information related to the future location of the mobile electronic device (200) for controlling operation of the communication network (100).

## Description

### Background

The present document is concerned a method for managing demands on a communication network.

In wireless communication networks, the current location of a mobile electronic device is routinely determined using triangulation or GPS information. Knowledge of the current location of mobile electronic devices allows the communication network to adjust its resources and to perform optimization according to current demand, i.e. by increasing transmission power for certain areas or by switching cells in hotspot areas on or off according to the demand. However, with mobile devices moving around the network, demand in any one location may rapidly change when a large number of mobile devices move into or out of a specific location. Thus, the communication network necessarily lags behind in its responses to any, possibly rapid, changes in load.

There is thus a need to provide a method for accurately predicting future demands on individual components of a communication network

### Summary

Mobile electronic devices which are moving around a communication network often follow a predetermined route, e.g. a route previously computed by a navigation device. Knowledge of the predetermined route for a mobile electronic device allows the communication network to predict where the mobile device will be in future. Knowledge of such future location information for the mobile electronic device allows the communication network to accurately predict future loads and to efficiently plan for optimization of procedures such as handover procedures.

A method for determining a future location of a mobile electronic device comprises receiving route information at a communication network, wherein the route information includes at least destination information for the mobile electronic device. Next, the route information can be associated with the mobile electronic device. Then, a future location of the mobile electronic device may be determined from the route information associated with the mobile electronic device. The information related to the future location of the mobile electronic device can then be used for controlling operation of the communication network. Such a method allows an accurate prediction of a future location of the mobile electronic device, and thus allows for planning handover procedures in advance or for switching cells on or off in time for predicted changes in demand. The route information may comply with a predefined data format and may include further optional information. For example, the route information may be transmitted in a route information message to the communication network.

The mobile electronic device may have an embedded navigation device to determine the route information, or may be connected, via wireless or wired connection, with a navigation device that calculates the route information for the mobile device. In these cases, the mobile device may send the route information, possibly together with an identifier of the mobile device, to the communication network which can then make the association between the route information and the mobile device. Alternatively, the route information is determined by a navigation device which is associated with the mobile device and sent directly from the navigation device to the communication network without being routed over the mobile device. In this case, the navigation device has a communication subsystem, or is connected to a communication system for communication with the communication network. The communication network may then associate the route information with the mobile device, e.g. based on a mobile device identifier received with the route information.

The information related to the future location of the mobile electronic device may further comprise at least one of: information related to handover planning, information related to load prediction, decisions of switching on/off cells, and information related to location-based applications. The provision of this information to network components allows individual components to react according to predicted demand, without the need for each network component to directly receive and process the future location information of the mobile electronic device.

Controlling operation of the communication network may include controlling network components within the communication network, or entities outside the communication network but associated with it. For example, the method may further comprise providing information related to the future location of the mobile electronic device to a base station of the communication network. Base station parameters, such as transmission power or transmission bandwidth, may be adjusted according to the received information related to the future location of the mobile electronic device. Thus, base stations can be switched on or off, or their transmission power levels can be adjusted in time for predicted changes in demand. In a similar manner route information or information related to the future location of the mobile device may be provided to other network entities or entities associated with the network to control operation of the network based on predicted network load or demand.

According to some embodiments, the route information may be received from a navigation device. Information for associating the route information with the mobile electronic device may be received either from the navigation device or from the mobile electronic device. Thus, a navigation device which is not integrated with the mobile device may supply route information, and the network may receive the route information and the associated mobile electronic device's identification information as separate messages. The mobile electronic device and the navigation device may be connected via a machine-to-machine interface, using short-range wireless transmission or a wired connection.

According to some embodiments, the route information may be received from a navigation device, and information regarding a current position of the mobile electronic device may be received from the mobile electronic device. Thus, according to these embodiments, it is not necessary for the navigation device to exchange data with the mobile electronic device, as long as the mobile electronic device provides position information which allows the communication network to determine an association between the navigation device and the mobile electronic device. A processing unit provided in the network may then correlate the positional data received from the mobile electronic device with the route information received from the navigation device. Depending on the correlation between the positional data and the route information, it can then be determined whether the mobile electronic device is following the route described by the navigation device.

The method may further comprise receiving proximity information related to the distance of at least one mobile electronic device from the navigation device. Such proximity information can be provided either by the navigation device or by the mobile electronic device, and it allows for a higher reliability in determining whether a mobile electronic device is following the same route as the navigation device. Sensors may be provided on the navigation device or the mobile electronic device for detecting the presence of other devices, or short range wireless communication protocols may be used for detecting of and determining the proximity to other devices.

According to some embodiments, the route information may comprise a departure location, a destination location, information about a class of route, and/or about route calculation parameters. Thus, a route can be defined accurately while reducing the amount of data transmitted as route information. Further, the route information may comprise information related to the speed of the mobile electronic device or the type of the mobile with respect to a speed category (e.g. pedestrian, car, etc.). Information related to the speed or speed category of the mobile could be the most recently used speed state of the mobile electronic device or the navigation device in association therewith. For example, the speed states of 3GPP as defined in TS 36.331, RRC could be used. There are 3 speed states for the mobile defined in 3GPP: Medium, Low, High, and these are selected by the mobile itself depending upon speed state parameters. These parameters are sent by the network, and are based on certain numbers of handovers or cell selections within a given time.

According to some embodiments, the route information may further comprise at least one intermediate point location. The provision of intermediate point locations may help in resolving route ambiguities, such that the prediction accuracy of the mobile electronic device's future location is improved.

In embodiments, the route information may comprise a departure location and a destination location. The method may further comprise determining a plurality of possible routes between the departure location and the destination location. Location information may be received from the mobile electronic device. Then, respective probability values may be assigned to the possible routes in accordance with the received location information. Finally, a future location of the mobile electronic device may be determined according to the probability values of the possible routes. The transmission of only departure and destination locations reduces the amount of data transmitted as route information, but increases the demands on the computational resources of the network. A possibly large number of routes may have to be determined and it needs to be monitored which of those possible routes the mobile electronic device is following. The communication network can use location information received from the mobile electronic device in order to increase the prediction accuracy of the mobile electronic device's future location by resolving the ambiguity of several possible routes which fit the received route information.

The method may further comprise receiving location information of the mobile electronic device. The received location information may be compared to a location predicted from the route information. Subsequently, it may be determined whether the mobile electronic device has deviated from the route. If the deviation is larger than a predetermined threshold, updated route information may be requested. Thus, the communication network can monitor whether the mobile electronic device stays on the route which has been computed from the received route information, and can update the route information if the mobile electronic device leaves the initially supplied route. Alternatively, if there is a change of route or any interruption in the following course, the route information can also be directly updated by the mobile device or the navigation device in association therewith if a route deviation or interruption (e.g. due to traffic congestion) is detected. In these cases, a route update message similar to an initial route information message is sent and received by the network. This allows for changes in the route followed by the mobile electronic device to be communicated to the network, thus improving the estimation quality of the future location of the mobile electronic device.

The route information may be conveyed on a radio access signaling layer of the communication network. This allows for a fast transmission of the route information signal, without the need for establishing a higher-layer signaling connection between the mobile electronic device and the communication network.

The information related to the future location of the mobile electronic device may be sent to components of the communication network using higher-layer signaling or higher-layer protocols. This allows for the information related to the future location of the mobile electronic device to be reliably and efficiently sent to various components and entities in-and outside the network.

For some embodiments, the information related to the future location of the mobile electronic device may be sent to components of the communication network as context information during handover of the mobile electronic device. Thus, the information related to the future location of the mobile electronic device can be included into the context information messages that are sent routinely during handover, and the amount of individual messages sent between components of the communication network can be reduced.

Furthermore, a node for a communication network is provided. The node comprises a receiver for receiving route information from a mobile electronic device or a navigation device. The route information may include destination information associated with the mobile device. The route information may include further information as mentioned above. The processor associates the received route information with the mobile electronic device, and determines a future location of the mobile electronic device from the route information. Then, the processor determines and provides information related to the future location of the mobile electronic device to other network entities for controlling operation of the communication network.

A system for determining a future location of a mobile electronic device may comprise a communication network, which is adapted to perform the above-described method and at least one mobile electronic device. Such a system allows an accurate prediction of a future location of the mobile electronic device, and thus allows for planning handover procedures in advance or for switching cells on or off in time for predicted changes in demand.

Further, a mobile electronic device may be provided, comprising a communication subsystem for communication with a communication network; a navigation subsystem for determining a route from user input of a destination location and for determining whether the mobile electronic device is following the route; and a processor. The processor may be adapted to generate route information from the route and cause the route information and information for associating the route information with the mobile electronic device to be sent to the communication network. The processor may further cause updated route information to be sent to the communication network if the mobile electronic device deviates from the route. Such a mobile device provides route information to the communication network which allows an accurate prediction of a future location of the mobile electronic device, wherein route information is automatically updated if the mobile electronic device leaves the previously transmitted route.

It should be noted that the methods and systems including its preferred embodiments as outlined in the present document may be used stand-alone or in combination with the other methods and systems disclosed in this document. Furthermore, all aspects of the methods and systems outlined in the present document may be arbitrarily combined. In particular, the features of the claims may be combined with one another in an arbitrary manner.

### Brief description of the drawings

In the following, embodiments of the present invention are explained in detail with reference to the accompanying drawings. Therein,
Fig. 1 is a schematic overview of an example of a communication network;
Fig. 2a and 2b show examples for the processing and sharing of route information in the communication network shown in Fig. 1;
Fig. 3 illustrates an example for a data format for reduced route information;
Fig. 4 shows a schematic representation of an example for data flow;
Fig. 5 shows a schematic representation of a further example for data flow;
Fig. 6 shows a schematic representation of a further example for data flow;
Fig. 7 shows a schematic representation of a further example for data flow;
Fig. 8 shows a schematic representation of a further example for data flow;
Fig. 9 shows a schematic representation of a further example for data flow;
Fig. 10 shows a schematic representation of a further example for data flow; and
Fig. 11 is a schematic overview of a further example of a cellular network.

### Detailed description

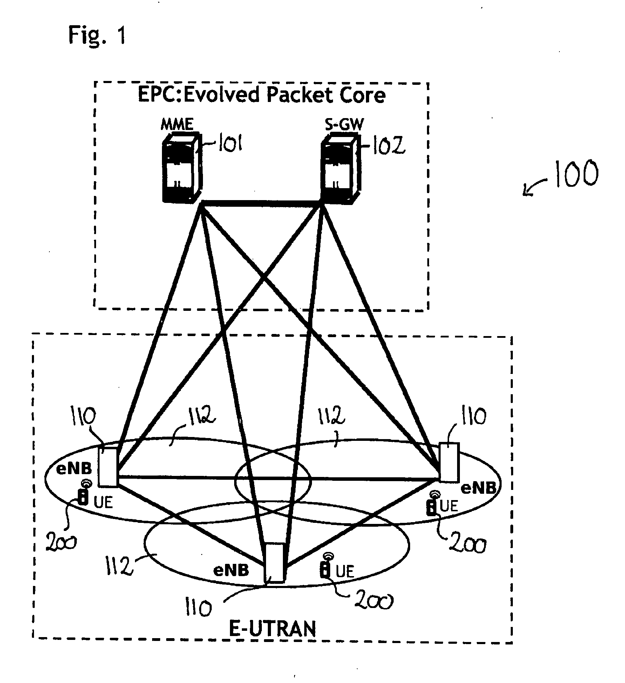

As shown in Fig. 1, a communication network 100 involves a variety of different servers 101, 102, which are e.g. configured as mobility management entities (MME) or serving gateways (S-GW) in a 3GPP network. For the purpose of the present method and system, the exact naming and functional assignment of the server 101, 102 is not relevant, as long as the server 101, 102 is adapted to communicate with a plurality of base stations 110, such as an evolved Node B (eNB) in a 3GPP communication network and other components in and outside (e.g. with other anchor components) the communication network (shown and not shown in the figure). In the following description, a 3GPP network is used as an example for the communication network 100. However, the described method and devices are not limited to a 3GPP network, but can be employed in any communication network 100.

A plurality of mobile electronic devices or user equipment (UE) 200 can connect to the communication network 100 if they are located within the respective coverage area 112 of a base station 110. UE 200 typically has a communication subsystem to establish and maintain a communication link via base station 110 with the communication network 100. Preferably, the communication subsystem complies with a standardized wireless communication protocol such as specified, e.g., in 3GPP. The UE 200 may further be provided with a navigation device that can determine route information for given departure and destination locations. For example, a route computation function with Global Navigation Satellite System (GNSS) based navigation capabilities may compute route information for the mobile user. The route information may comprise at least one of departure and destination locations and times, numbers, names or location coordinates of the roads traveled, arrival and departure times at intermediate locations and estimated speeds and travel times for sections of the route. Thus, from such route information, future locations of the UE 200 can be determined.

A reduced version of the route may be sent from the UE 200 or from an external navigation device to the communication network 100 as minimal route information (MRI) 300. If the external navigation device transmits the MRI 300 to the network 100, information identifying the UE 200, such as its IMSI, may be included with the MRI 300, so that the communication network 100 can associate the received MRI 300 with the UE 200. This MRI 300 can be processed by the communication network 100 in order to predict a future location of the UE 200.

In the context of this document, "minimal route information" 300 is to be understood as reduced information about the route, which allows a communication network 100 to reconstruct a route followed by the UE 200, without the UE 200 having to transmit an excessive amount of data that describes the route in great detail. As will be described below, the MRI 300 can include various levels of detail about the route, as the demands of reducing the data amount have to be balanced with the computational load of the communication network's processing units in reconstructing the route from the received data.

The predicted future location of the UE 200 can then be used by the communication network 100 e.g. for load prediction or handover prediction. Servers 101, 102 may transmit the predicted future location information directly to base stations 110, or the servers 101, 102 may provide base stations 110 with information, such as predicted loads, which are derived from predicted future location information for a single UE 200 or for a plurality of UE 200. Additionally, the communication network 100 may supply the predicted future location to location-based applications which provide the user of the UE 200 with information or services relevant to his/her predicted future location.

Thus, in contrast to prior art navigation applications, wherein the UE 200 shares navigation information with an application server and receives a calculated route or other location-based data in return, in the present method and system, the UE 200 transmits route information to the communication network 100, and the communication network 100 may then process and use this information for the purpose of network control and operation.

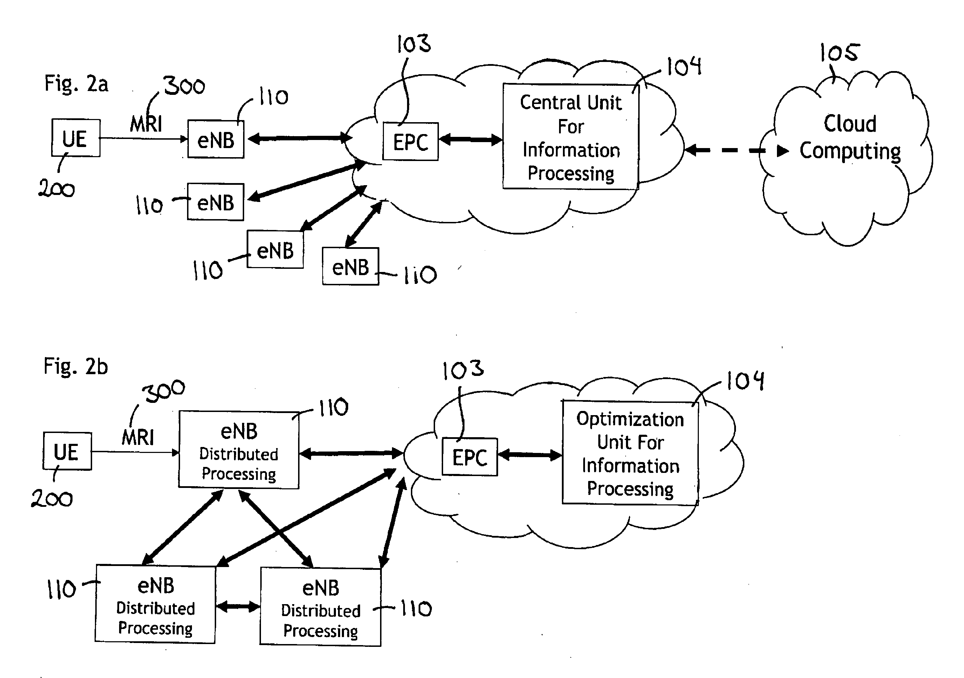

As shown in Fig. 2a, the UE 200 may send the MRI 300 to its eNB base station 110, which passes it on to a network server, such as e.g. an evolved packet core EPC 103 of a 3GPP network. The EPC 103 is in turn connected to a Central Unit 104 for information processing. Optionally, cloud computing resources 105 may be provided, which can perform some or all of the processing involved with the prediction of future locations of the UE 200. As shown in Fig. 2b, alternatively, the future location prediction may be performed at least in part by using distributed processing amongst a plurality of eNB base stations 110.

The route information might comprise a detailed list of location coordinates and their respective associated points in time covering the whole route in detail. If enough list entries are supplied, such route information would provide an accurate description of the planned route for the UE 200. Prediction of future location information for the UE 200 could then be performed simply by looking up the respective point in time in the list and noting its associated location. However, the transmission of such a large amount of data is not efficient. Thus, it is advantageous to provide reduced route information as MRI 300, which allows a reasonable prediction of the UE's future location without transmitting a large amount of data.

An example of MRI 300 can include:
I. Geographical coordinates of departure;
II. Geographical coordinates of destination;
III. Class of route (quickest, type of roads, etc. ...);
IV. Class of trip: pedestrian or car (this may be known by the navigation device if the user has set walking or driving options, or this may be known by the speed state of the mobile).

The MRI 300 is preferably standardized in order to allow for an efficient exchange of MRI data between different types of UE 200 and different communication networks.

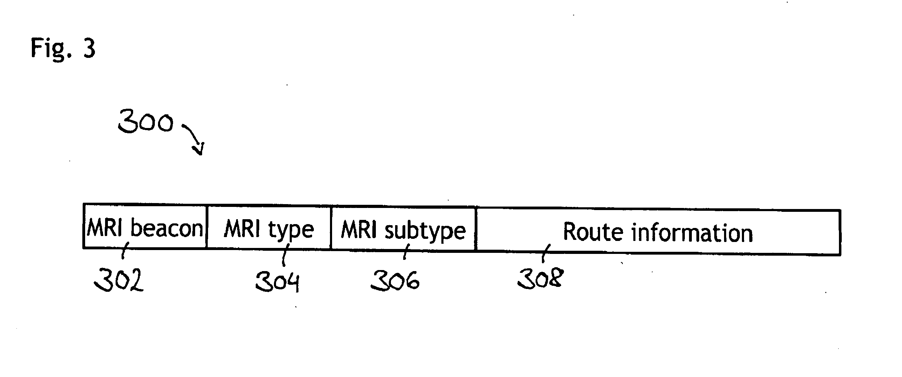

Fig. 3 shows an example of a format for MRI 300 data, e.g. as transmitted in a route information message.

The data format of the MRI 300 can be formed from several predefined components, comprising e.g. an MRI beacon 302, an indication of an MRI type 304, an indication of an MRI subtype 306, and the route information 308.

The MRI beacon 302 comprises bits/symbols/waveforms for alerting the network (e.g. via random access channel) to the transmission of MRI data 300.

The indication of MRI type 304 can be formed by sequences of bits/symbols/waveforms that define if the MRI route is either based on a set of common maps and algorithms for route calculation that are identical for the UE 200 and the communication network 100, or if the MRI route is supplied with no pre-defined knowledge on the maps and/or route computation algorithm used by the communication network 100.

In general, the UE 200 will not know which version of which maps and which route calculation algorithm will be used by a processing unit of the communication network 100. In some embodiments, the UE 200 and the communication network 100 may exchange information about the maps and route calculation algorithms used, such as e.g. mutually informing each other about names and/or version numbers of maps and algorithms. Then, the UE 200 or the communication network 100 can decide whether the maps and route calculation algorithms are compatible, i.e. whether it is likely that the communication network 100 will be able to exactly reproduce a route calculated by the UE 200, if only departure and destination locations and optionally some further route parameters (shortest, fastest, ...) are transmitted as MRI 300.

If the communication network 100 uses compatible maps and substantially the same route calculation algorithm as the UE 200 or external navigation device, then supplying only a very small amount of route information (such as departure and destination locations and a few calculation parameters) will be sufficient in order to ensure that any future locations derived by the communication network 100 from the MRI 300 will coincide with the computed route of the UE 200.

However, if the maps and/or route calculation algorithms differ between the UE 200 and the communication network 100 or are mutually unknown, then more detailed route information is preferably transmitted as MRI 300, in order to allow the communication network 100 to reach an accurate prediction of the UE's future location, even though the communication network 100 cannot exactly recreate the route calculation of the UE 200.

The indication of an MRI subtype 306 can represent the amount of intermediate points in the map that are transmitted in order to allow the network to define the route. A greater number of intermediate points will generally result in a higher prediction quality for the future location of the UE 200. Alternatively, different MRI subtypes 306 may be predefined, as will be explained below.

The example above assumes that the UE 200 pre-defines what kind of MRI 300 is to be transmitted. Another alternative would be for the communication network 100 to negotiate the MRI type 304 with the device prior to sending the MRI data. Such a negotiation could be started by the UE 200 transmitting an MRI beacon signal to its eNB 110 and the communication network 100 answering with an acceptance signal indicating the MRI types and subtypes accepted by the network 100.

If the UE 200 can provide MRI 300 which conforms to the type and subtype specifications sent by the network 100, it transmits an acknowledgement signal followed by the MRI 300 in a format as requested. If not, it sends a negative acknowledgement signal followed by the possible MRI types 304 and subtypes 306 that the UE 200 can provide. The network 100 can then acknowledge one or several of the possible types 304 and subtypes 306 offered by the UE 200. Finally, the UE 200 can send the MRI 300 in a format according to the network acknowledgement.

In general, the MRI 300 transmitted to the communication network 100 is supposed to enable the communication network 100 to predict a future location of the UE 200 by reconstructing the route that the UE 200 is following. However, a route calculation performed by a processing unit of the communication network 100 does not necessarily reach the same result as a route calculation performed by the UE 200 from the same starting parameters, as the communication network 100 and the UE 200 may use different maps and/or different algorithms. Thus, different MRI 300 may be transmitted for different situations, depending on the compatibility of maps and route algorithms used and on the available data bandwidth and processing resources.

### Example 1: compatible maps and route calculation algorithm

If the UE 200 and the communication network 100 share compatible maps and use a common route calculation algorithm, a standard format for route information data, such as the Standard Interchange Format (SIF) can be used for the exchange of route information in a data format widely accepted by a large variety of devices and applications.

In this case, the route information 308 may be composed of something like:
*type1, la bel, node1,z1, node2,z2,class, speed, .*..
wherein *type1* defines a link record type and label serves as an identifier to distinguish this link from all others. The nodes *node1* and *node2* give two-dimensional coordinates for given points on the route (such as an origin, a destination and any intermediate points needed for route disambiguation). The vertical coordinates *z1* and z2 may be used for indicating a vertical position of the respective node, such that e.g. different roads meeting at a flyover crossing can be specified separately. Further parameters, such as the route class (shortest, fastest, ...), the average speed and other optional information may further be included. The number of nodes can be indicated at the MRI subtype information 306.

As, in this example, the UE 200 and the communication network 100 are assumed to use compatible maps and a substantially identical route calculation algorithm, any MRI 300 which allows the UE 200 to accurately specify a given route from an origin to a destination will also allow the communication network 100 to calculate an identical route and to derive future location information from this route.

Thus, in this example, the decision of how much route information to include in the MRI 300 is fairly straightforward, as the UE 200 can easily test whether the MRI 300 is sufficient to calculate a well-defined route using its own route calculation algorithm. If the UE 200 can calculate a non-ambiguous route from the MRI 300, then the same is true for the communication network 100, and the MRI 300 is sufficiently detailed to allow an accurate prediction of the UE's future location. Hence, in this example, the amount of route information which allows an exact prediction of the UE's future location by the communication network 100 can be determined by the UE 200. It is preferable to transmit as little MRI 300 as possible, while still including enough information in order to allow the communication network 100 to recreate the route followed by the UE 200.

The following examples consider the case that the MRI type 304 defines that the UE 200 and the communication network 100 do not share common maps and a common route calculation algorithm. This may be due to the fact that the maps and/or algorithms used by the UE 200 and the communication network 100 are mutually unknown, or it may have been found after an exchange of information that the UE 200 and the communication network 100 use different, non-compatible maps and/or algorithms. In this case, different levels of amount of information may be provided to the network 100, as illustrated in the following examples. The less route information 308 the UE 200 provides to the network 100, the higher is the effort for the network 100 to predict the UE's future location.

However, in order to minimize transmission overhead, it is desirable to transmit as little route information 308 as possible which still allows for a sufficient accuracy in predicting future locations.

### Example 2: non-identical maps and/or route calculation algorithm, minimum amount of route information

In this example, the UE 200 and the communication network 100 do not share common maps and/or a common route calculation algorithm, and the route information 308 is defined only by the geographic coordinates of origin and destination.

In this case, the communication network 100 may calculate a set of possible routes that the UE 200 may follow in order to reach the destination. As the route calculation algorithm and/or the maps used differ between the UE 200 and the communication network 100, the communication network 100 probably cannot derive the exact route of the UE 200 from the given origin and destination locations. Thus, it is preferable that the communication network 100 resolves the ambiguities involved with its predicted future locations for the UE 200 by tracking the UE's progress over time.

As the user starts the journey, the position of the UE 200 is tracked along time (via GPS information or triangulation) and compared with corresponding positions in the set of possible routes calculated by the communication network 100 from the received MRI 300. In this way, the communication network 100 can evolve along time the likelihoods (probabilities) of the possible future path of the UE 200. The respective probabilities assigned to each possible route can be adjusted according to the past and present positions of the UE 200.

During the tracking, some possible routes, which no longer correspond to the path actually taken by the UE 200 to reach its destination, can be disregarded, and the prediction of a future location of the UE 200 can be based on a reduced set of possible routes, using the probability values assigned to these routes. Thus, the prediction of a future location for the UE 200 becomes more accurate as the UE 200 gets closer to its destination.

This approach requires high effort of the communication network's 100 computational resources and is the one with the lowest reliability. Nevertheless, the transmission overhead is minimized, as only the origin and destination locations need to be transmitted initially. During the tracking, only the current position of the UE 200 needs to be transmitted, and the intervals between transmissions can be set according to the UE's velocity or according to other parameters (such as the occurrence of route branching points for two or more alternative routes).

### Example 3: non-identical maps and/or route calculation algorithm, medium amount of route information

In order to reduce the computational load of the communication network 100 in the example 2 described above, the transmitted route information 308 may comprise the following components:
*origin, destination, intermediate points (granularity defined on MRI subtype).*

Due to the provision of intermediate points, the network 100 can estimate the UE's route more accurately than in example 2, such that fewer possible routes need to be considered and the estimation accuracy of the UE's future location is increased. However, the amount of data transmitted as MRI 300 is increased compared to the MRI 300 of example 2.

Unlike the situation in example 1, in the current example the UE 200 cannot easily determine which amount of data to transmit as route information in order to allow for a non-ambiguous recreation of the route. As the communication network 100 uses different maps and/or different route calculation algorithms to the UE 200, route information which allows for the calculation of a non-ambiguous route at the UE 200 may not result in the calculation of the same, non-ambiguous route at the communication network 100.

### Example 4: non-identical maps and/or route calculation algorithm, large amount of route information

In order to further improve the estimation accuracy of the UE's future location, in this example, the following route information 308 may be transmitted:
*origin, destination, intermediate points (granularity defined on MRI subtype), road type, average* speed.

The additional information further improves the reliability of the estimation of the UE's future location. Other types of information, such as stopovers, could be considered as additional MRI components. With additional information such as road type and/or estimated average speeds, the route calculation at the communication network 100 can be further influenced, such that the route calculated at the communication network 100 using the MRI 300 corresponds as closely as possible to the route the UE 200 is actually following. Thus, the prediction accuracy of the future location information can be improved. However, in this case, the MRI 300 corresponds to a fairly large amount of data that needs to be transmitted from the UE 200 to the communication network 100. Hence, this example is mainly useful for situations wherein an accurate prediction of the UE's future location has higher priority than a reduction in the transmission overhead of the MRI 300.

In general, the UE 200 shares information with the communication network 100 regarding the computed route at the beginning of the journey of the UE's user. Such information is exploited by the communication network 100 in order to predict the future locations of the UE 200 as accurately as possible.

The information of future user locations can be used advantageously in various scenarios. A few instances of situations that can benefit from that are: network handover planning, decisions of switching on/off cells for energy savings, load prediction (e.g. for network cells or base stations) and location-based applications.

When a UE 200 moves around in the communication network 100, situations may occur, wherein the UE 200 moves along a cell boundary and gets handed over forwards and backwards repeatedly between the same base stations 110. This is obviously an inefficient use of network resources. The above-described method allows predicting future locations of the UE 200, so that the handover can be planned more efficiently.

Several solutions in 3GPP have been proposed for cell switching on and off. Furthermore, at the GreenTouch project that is being promoted by several cellular network providers, a clean slate network is proposed, wherein a signaling network is always on to guarantee coverage and an independent data network is dynamically switched on and off according to the demand. The route information 308 transmitted by the UE 200 can be used for the prediction of future load for individual cells, as it can be predicted which and how many UEs 200 will be within a cell at a future point in time.

Further, the route information 308 provided by the UE 200 can be used for enhancing location based service applications. For example, information about events at the future location can be provided to the user of the UE 200 ahead of time, or the download of large data amounts can be scheduled in advance to coincide with a time when a user is predicted to be within an area with a high transmission bandwidth.

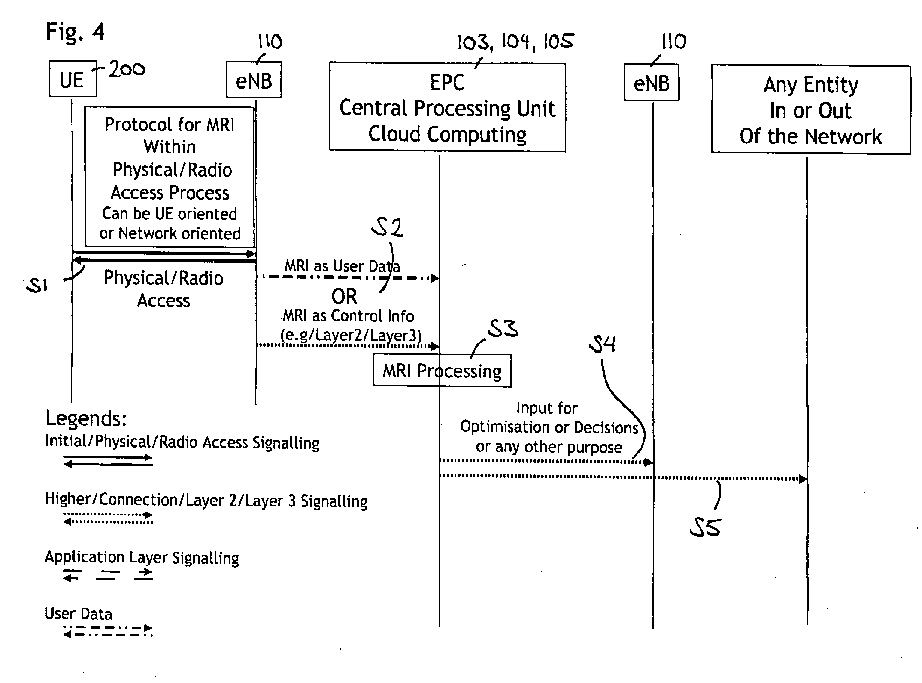

Fig. 4 shows an example of the data flow and processing steps for predicting the future location of a UE 200 in a communication network 100.

In step S1, the UE 200 or the external navigation device connected to the UE 200 transmits the computed MRI 300 to the eNB base station 110 of the cellular communication network 100 via physical/radio access signaling. The use of the physical/radio access signaling layer has the advantage that no higher-layer connection needs to be established, and thus the transmission of the MRI 300 can be achieved with a minimum of data and communication overhead.

In step S2, the eNB base station 110 passes the MRI 300 on to a central processing unit 104 of the network server 103 or to a cloud computing interface 105. In a 3GPP network 100, this transmission may occur either as user data or as control information, using a higher level signaling connection than the physical/radio access used for transmission of the MRI 300 to the eNB base station 110.

Subsequently, the MRI 300 is processed in step S3 in order to determine a future location of the UE 200. As described above, the prediction accuracy of the future location depends on the type of route calculation algorithm used by the network server 103 and/or on the amount and type of route information 308 included with the MRI 300.

Information related to the UE's future location is subsequently passed on to relevant eNB base stations 110 in step S4, in order to allow for efficient handover planning and/or energy management at the base stations 110. Depending on the processing capabilities of the base stations 110, the information passed on to the base station 110 may include the detailed future location information for at least one UE 200, or it may include some information derived from the future location information of at least one UE 200, such as a prediction of future load at the base station 110 or instructions to switch on or off or to adjust power levels. Further, in step S5, future location information is passed on to other entities in or out of the network, e.g. to entities providing location based services such as location-based advertising, notification, scheduling and the like.

The above-described series of steps is repeated in order to update the MRI. Such an update occurs either in periodic intervals of time, or when a perturbation on the route occurs, i.e. when the UE 200 deviates from the original route, changes average speed, etc. In order to detect such a perturbation, the UE 200 can monitor its deviation from the computed route, and if the current location and/or speed of the UE 200 differ from the beforehand predicted locations and parameters by a threshold, then the MRI 300 is retransmitted to the network (step S1).

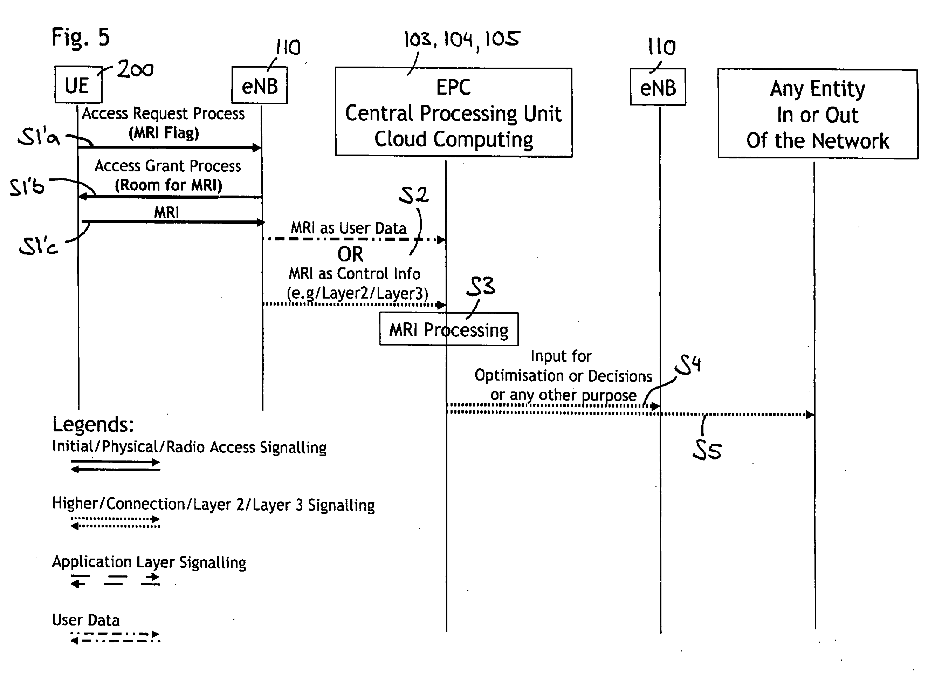

Fig. 5 shows a further example of the data flow and processing steps for predicting the future location of a UE 200 in a communication network 100. The example of Fig. 5 differs from the example of Fig. 4 in the way the MRI 300 types and format are negotiated between the UE 200 and the eNB base station 110.

In this example, in step S1'a, the UE 200 sends an MRI flag to its eNB base station 110, thus initiating an MRI negotiation. The eNB base station 110 answers with an acknowledgement in step S'1b, specifying MRI types and formats accepted by the communication network 100. In step S1'c, the UE 200 then transmits its MRI 300 in the data format specified in step S1'b. As in the example shown in Fig. 4, the MRI 300 data is sent via the physical radio access signaling layer. Further processing of the MRI 300 at the network 100 is performed according to steps S2-S5 described above with reference to Fig. 4.

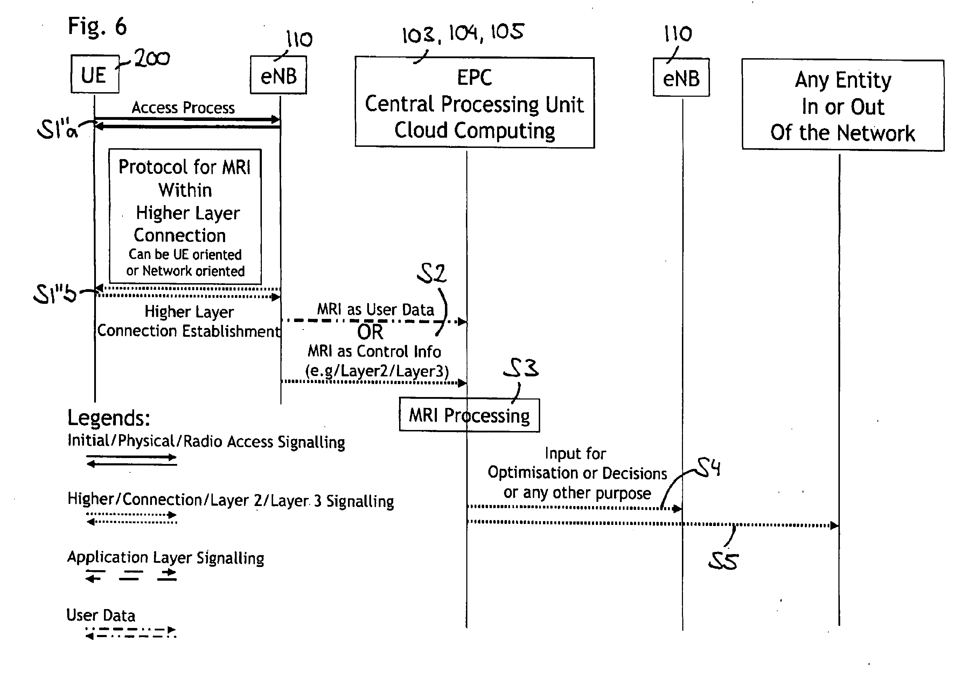

Fig. 6 shows a further an example of the data flow and processing steps for predicting the future location of a UE 200 in a communication network 100. The example shown in Fig. 6 differs from Fig. 4 and 5 in that the MRI information is not sent via the initial, physical radio access layer, but is transmitted using a higher layer connection, e.g. TCP/IP.

In step S1"a, an access process is performed via the initial, physical radio connection in order to establish a higher layer connection between the UE 200 and its eNB base station 110. In step S1"b, the MRI 300 is sent via the established higher layer connection. The content and format of the MRI may be defined by the UE 200 (as shown in Fig. 4), or by the communication network 100 (as shown in Fig. 5). The further processing of the MRI 300 at the network 100 is performed according to steps S2-S5 described above with reference to Fig. 4.

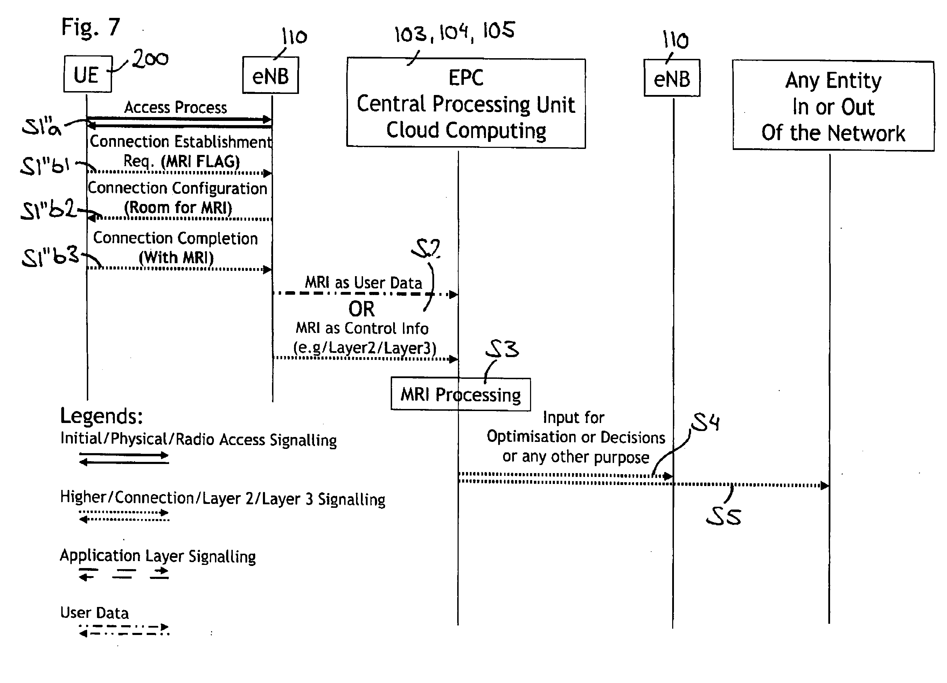

In Fig. 7, further detail is provided on the processing step S1"b of the example shown in Fig. 6. In step S1"b1, the UE 200 sends an MRI flag via the higher layer connection established previously in step S1"a. The eNB base station 110 responds in step S1"b2 with the configuration information for the MRI 300. Then, the UE 200 sends its MRI 300 according to the specified format to the eNB 110 via the higher layer connection in step S1"b3. The further processing of the MRI 300 by the communication network 100 is performed according to steps S2-S5 described above with reference to Fig. 4.

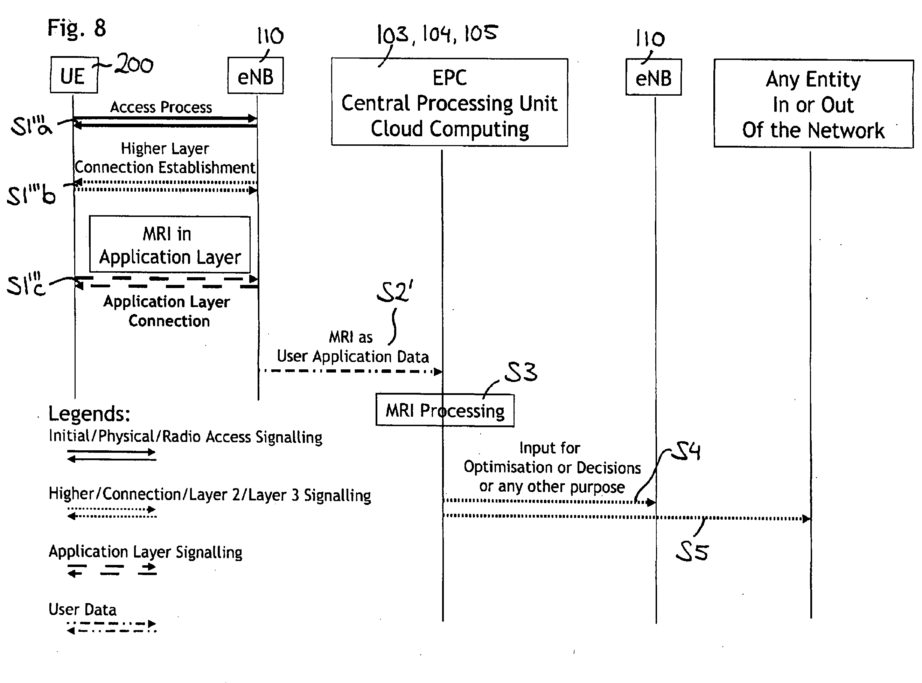

Fig. 8 shows a further example, which differs from the examples shown in Fig. 4-7 in that the MRI 300 is sent via an application layer connection between the UE 200 and the eNB base station 110. First, in step S1"'a, an access process is performed in order to establish a higher layer connection between the UE 200 and the eNB base station 110. Once the higher layer connection is established (step S1"'b), an application layer connection is set up and the MRI 300 is transmitted via the application layer connection using an application layer protocol (step S1"'c).

Subsequently, in step S2', the MRI 300 is sent on to the network server 103, 104 or the cloud computing interface 105 as user application data. The further processing and transmission of future location information shown in steps S3-S5 corresponds to the processing described above in conjunction with Fig. 4.

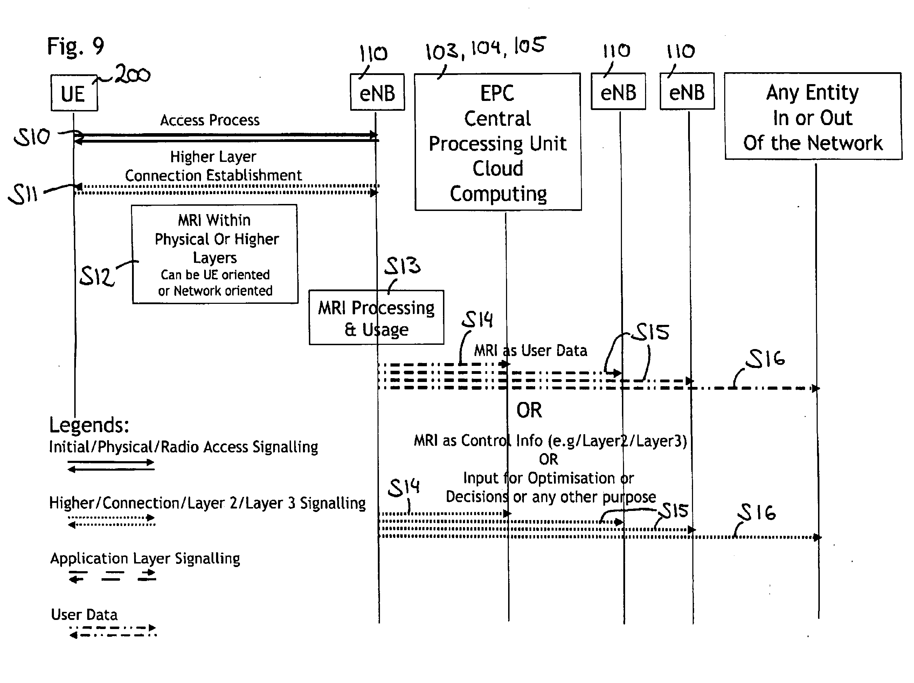

Fig. 9 shows a further example of the method for predicting a future location of the UE 200. The method illustrated in Fig. 9 may be performed in a communication network 100 as shown in Fig. 2b, i.e. a network wherein the eNB base stations 110 can perform distributed processing.

In step S10, an access process is performed via the direct physical radio access link between the UE 200 and the eNB base station 110. Subsequently, in step S11, a higher layer connection may be established between the UE 200 and the eNB base station 110. MRI 300 is sent from the UE 200 to the eNB 110 in step S12, either via the physical radio access, as shown in Fig. 4 and 5, or via a higher or application layer connection, as shown in Fig. 6 to 8. In step S13, the MRI 300 is processed within the eNB base station 110 or within a plurality of interconnected eNB base stations 110 via distributed processing in order to predict a future location for the UE 200. The future location information can then be used for handover planning or the like within the eNB base station(s) 110 involved in the processing step.

In step S14, the MRI 300 and/or the future location information is transmitted from the eNB base station 110 to a network server 103, 104 or to a cloud computing interface 105. In step S15, the future location information and/or the MRI 300 is further shared with other eNB base stations 110 which are affected by the UE's route. Finally, in step S16, the future location information or the MRI 300 are also transmitted to further entities in or out of the network 100 which may provide location-based services and applications. In steps 14-16, the relevant data may in each case be transmitted either as user data or as control information, using a higher-level connection.

The processing in step S13 may be limited to predicting future locations of the UE 200 which are located in the coverage area of those base stations 110 which are involved in the distributed processing. In this case, the base stations 110 involved in the distributed processing will pass on the MRI 300 to other network entities in steps S14-S16, in order to allow the MRI 300 to be processed further for predicting future locations of the UE 200 which are located within the coverage area of other base stations 110.

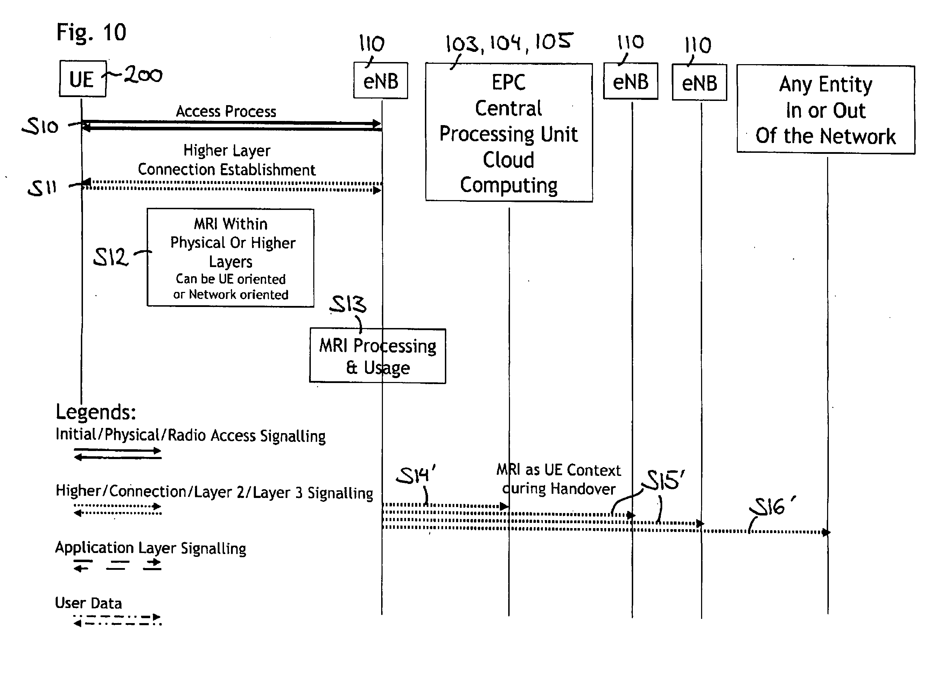

Fig. 10 shows a further example of the method for predicting a future location of the UE 200, which differs from Fig. 9 in the way the future location information and/or the MRI 300 is distributed across the network 100 and to external entities.

After establishing a higher layer connection, the MRI 300 is transmitted to the eNB base station 110 and processed within the eNB base station 110 in steps S10-S13, as described above in connection with Fig. 9. In steps S14' to S16', the MRI 300 and/or the future location information for the UE 200 is transmitted by the eNB 110 to the network server 103, 104 or the cloud computing interface 105, to other eNB base stations 110 or to external entities as context information during handover.

Thus, the transmission overhead during the sharing of the MRI 300 and/or of future location information for each UE 200 is minimized. During handover, UE context information is shared by the previous eNB base station 110 with the network server 103, 104 and with other eNB base stations 110 anyway. The inclusion of reduced route information or of location information in this existing transmission protocol provides the extra functionality of future location prediction for handover planning or energy efficiency considerations, without incurring a significantly larger transmission overhead.

In the above-described embodiments, it has been assumed that the UE 200 and a navigation device for computing the planned route and for generating the MRI 300 are either integrated or in connection with each other. The UE 200 and an external navigation device may communicate via any suitable short-range wireless technology, such as BlueTooth, infrared or the like. In this case, any MRI 300 transmitted to the eNB base station 110 can easily be associated with a specific UE 200, and the network 100 can predict the future location of a specific UE 200 according to its MRI 300.

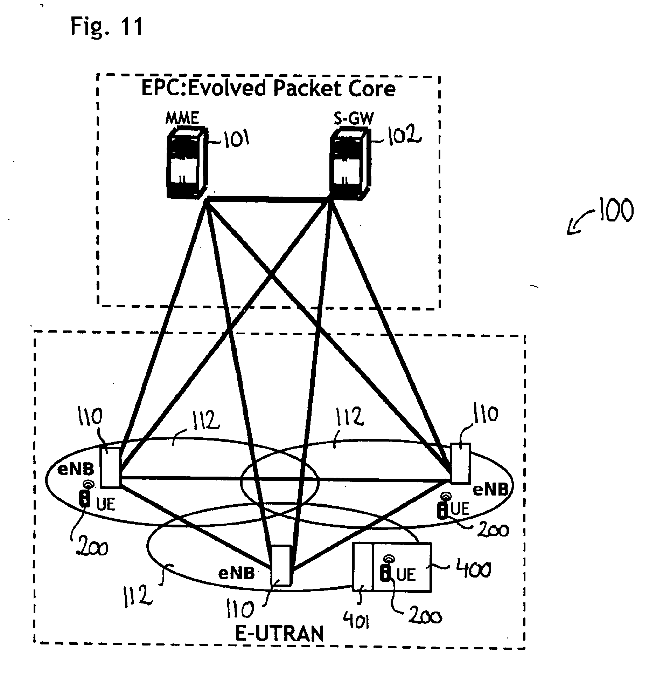

There are, however, a number of scenarios where it is not technically possible or not desirable to establish a direct connection between a UE 200 and an external navigation device. Due to privacy reasons, a user may not wish to share his/her mobile device ID with external navigation devices provided e.g. in rental cars or trains, or the UE 200 might not be compatible with the external navigation device. Fig. 11 shows a system, wherein an external navigation device 400 and the UE 200 do not directly exchange data with each other.

If the external device 400 (e.g. provided in rental cars, high speed trains or the like) transmits route information to the network 100, some embodiments described below provide a method for predicting the future locations of the UEs 200 despite the lack of a direct association between route information provided to the network 100 and the UE 200 which is following this route. In these embodiments, the network 100 receives current position information from the UE 200 (via GPS information or triangulation) and MRI 300 from the external navigation device 400.

Then, the network 100 correlates the current positional information of the UE 200 with the location and route information according to the received MRI 300 during several different time instances. If the positional information of the UE 200 repeatedly matches the route according to the received MRI 300, it may be assumed that the UE 200 is traveling along the same route as the external device which is transmitting the MRI 300. Then, the MRI 300 may be used to predict future locations of the UE 200. Further information, as described in detail below, may also be used in order to increase the confidence in an association between the UE 200 and the MRI 300.

As described above for the examples shown in Fig. 4-10, a variety of different protocols for transmission and reception of MRI 300, positional information from the UE 200 and further information can be implemented. MRI 300, positional information and further information may be transmitted using physical radio access signaling or higher-layer signaling.

The processing for extracting future location information from the MRI 300 and for determining whether a UE 200 is following a route described by the received MRI 300 may be performed by a network server 103, in a cloud computing structure 105, or by the eNB base stations 110 in a distributed processing architecture.

Future location information may be passed on to other network components as user data, using higher-layer signaling or as context information during handover.

The external navigation device 400 or the UE 200 may also provide further information to the communication network 100 regarding the presence or absence of the UE 200 in the vicinity of the external navigation device 400, and optionally also the distances between the external navigation device 400 and the UE 200.

In some embodiments, the external navigation device 400 comprises a sensor 401 for detecting the presence and for measuring the distances to any UEs 200 which are close to the navigation device 400. No information needs to be exchanged between the external navigation device 400 and the UE 200. The presence/absence and distance information supports the network's estimation of the UEs 200 that are following a certain external navigation device 400.

In some embodiments, the UE 200 may detect the presence of an external navigation device 400, such as an external navigation device 400 provided in a high-speed train, and may transmit this information to the communication network 100. Depending on the information broadcast from the external navigation device 400, the UE 200 may further detect identification information of the external navigation device 400. From a comparison of the position of the UE 200 and the position of any external navigation devices 400 sending MRI 300 to the communication network 100, or from the identification information of the external navigation device 400, the communication network 100 can determine an association between the UE 200 and the external navigation device 400.

An example of such a situation may be a long distance train, wherein route information is generated and transmitted by the train in order to facilitate various scheduling and passenger information applications within the rail operator's network. However, any users traveling on the train will not necessarily be able to or want to have their mobile device identification disclosed to the train's data processing system.

In the method according to some embodiments, there is no need for the user to establish any direct connection between his/her UE 200 and the train's navigation device 400. Instead, only the communication network 100 would have to establish a communication channel with the train's navigation device 400, and receive MRI 300 for the route which the train is following. The communication between the network 100 and the train's navigation device 400 can be performed as shown in Fig. 4-10. The type and content of the MRI 300 can be either defined by the train's navigation device 400 or can be negotiated between the train's navigation device 400 and the network 100, as described above.

Then, the communication network 100 can compare any positional data received from UE 200 which are traveling on the train to positional data calculated from the MRI 300 received from the train's navigation device 400. The communication network 100 can then determine whether any particular UE 200 is likely to be following the same route as the train. If this is the case, i.e. if a predefined minimum number of positions of the UE 200 coincide with the positions calculated from the MRI 300 received from the train, the future locations of the UE 200 can be predicted according to the MRI 300 received from the train's navigation device 400.

As long distance trains tend to travel through sparsely populated areas, which often have only sparse network coverage, it is advantageous for the communication network 100 to know in advance when a large amount of handover traffic and data transmission is going to suddenly appear in a previously quiet area.

In some network configurations, various types of at least partly overlapping cells exist, such as e.g. E-UTRAN cells used for capacity enhancing at hot spots in a 3GPP network. It has been proposed that unused cells may be at least partly switched off when not in use in order to enhance the energy efficiency of the network. If the load within the coverage area of such a switched-off cell rapidly increases, it is thus useful to be able restore the switched-off cell to full service in time to keep up with the increased demand. The above-described method allows for an accurate prediction of future load of a given cell.

The above-described method, system and devices provide the advantage of prediction of future demands on a communication network and its individual components. Thus, the communication network can prepare for e.g. increased load in a particular location ahead of time. The respective network components have additional time to prepare for changed load conditions, such that e.g. switching on/off procedures or adjustments in transmission power and bandwidth can be planned in advance. Any time-consuming processes, such as e.g. system startup, can thus be scheduled so that the network resources are available in time for the increased demand, and users experience a high level of service throughout the communication network.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for determining a future location of a mobile electronic device (200), comprising:
- receiving (S1; S10) route information (308) at a communication network (100), wherein the route information (308) includes destination information;
- associating the route information with the mobile electronic device (200);
- determining (S3; S13) a future location of the mobile electronic device (200) from the route information (308) associated with the mobile electronic device (200); and
- providing (S4, S5; S14, S15, S16) information related to the future location of the mobile electronic device (200) for controlling operation of the communication network (100).

2. Method according to claim 1, wherein the information related to the future location of the mobile electronic device (200) comprises at least one of: information related to handover planning, information related to load prediction, decisions of switching on/off cells, and information related to location-based applications.

3. Method according to claim 1, further comprising:
providing (S4; S15) information related to the future location of the mobile electronic device (200) to a base station (110) of the communication network (100); and
adjusting base station (110) parameters, such as transmission power or
transmission bandwidth, according to the received information related to the future location of the mobile electronic device (200).

4. Method according to claim 1, wherein the route information (308) is received from a navigation device, and wherein information for associating the route information (308) with the mobile electronic device is received either from the navigation device or from the mobile electronic device (200).

5. Method according to claim 1, wherein the route information (308) is received from a navigation device (400), and wherein information regarding a current position of the mobile electronic device (200) is received from the mobile electronic device (200).

6. Method according to claim 5, further comprising:
receiving proximity information related to the distance of at least one mobile electronic device (200) from the navigation device (400).

7. Method according claim 1, wherein the route information (308) comprises a departure location, a destination location, information about a class of route, and/or about route calculation parameters.

8. Method according to claim 1, wherein the route information (308) comprises a departure location and a destination location, further comprising:
determining a plurality of possible routes between the departure location and the destination location,
receiving location information from the mobile electronic device (200),
assigning respective probability values to the possible routes in accordance with the received location information, and
determining (S3; S13) a future location of the mobile electronic device (200) according to the probability values of the possible routes.

9. Method according to claim 1, further comprising:
- receiving location information of the mobile electronic device (200);
- comparing the received location information to a location predicted from the route information (308);
- determining whether the mobile electronic device (200) has deviated from the route, and requesting updated route information (308) if the deviation is larger than a predetermined threshold.

10. Method according to claim 1, wherein the route information (308) is conveyed on a radio access signaling layer of the communication network (100).

11. Method according to claim 1, wherein the mobile electronic device (200) determines a route deviation or interruption and sends route update information about the change in route or interruption to the communication network (100).

12. Method according to claim 1, wherein the information related to the future location of the mobile electronic device (200) is sent to components (103, 104, 105, 110) of the communication network (100) using higher-layer signaling, or as context information during handover of the mobile electronic device (200).

13. Node for a communication network, comprising:
a receiver for receiving route information (308), the route information (308) including at least destination information; and
a processor adapted to
- associate the route information with a mobile electronic device (200);
- determine a future location of the mobile electronic device (200) from the route information (308) associated with the mobile electronic device (200); and
- provide information related to the future location of the mobile electronic device (200) for controlling operation of the communication network (100).

14. System for determining a future location of a mobile electronic device, comprising:
- a communication network (100), which is adapted to perform the method of claim 1; and
- at least one mobile electronic device (200).

15. Mobile electronic device (200), comprising:
- a communication subsystem for communication with a communication network (100);
- a navigation subsystem for determining a route from user input of a destination location and for determining whether the mobile electronic device (200) is following the route; and
- a processor adapted to:
- generate route information (308) from the route;
- cause the route information (308) and information for associating the route information (308) with the mobile electronic device (200) to be sent to the communication network (100); and
- cause updated route information (308) to be sent to the communication network (100) if the mobile electronic device (200) deviates from the route.
